# EUROPÄISCHE PATENTSCHRIFT

(11) **EP 2 543 420 B1**
(45) Veröffentlichungstag und Bekanntmachung des Hinweises auf die Patenterteilung: **13.07.2016**
(21) Anmeldenummer: 12003832.8
(22) Anmeldetag: 15.05.2012
(51) Int. Cl.: B01D 33/23, B01D 63/16

(54) **Poröser Keramikfilter**
Porous ceramic filter
Filtre céramique poreux

(30) Priorität: 06.07.2011 DE 102011107278
(43) Veröffentlichungstag der Anmeldung: 09.01.2013
(73) Patentinhaber: Kerafol Keramische Folien GmbH, 92676 Eschenbach/Opf. (DE)
(72) Erfinder: Koppe, Franz, 92676 Eschenbach (DE); Münch, Christian, 95643 Tirschenreuth (DE)
(74) Vertreter: Hafner, Dieter

(56) Entgegenhaltungen:
- US-A- 5 730 869

## Beschreibung

Die Erfindung betrifft einen porösen Keramikfilter, erhältlich aus einer formbaren keramischen Masse, welche durch Sintern in ihrer Form fixiert wird, umfassend ebene Platten und erste und zweite Distanzelemente, welche unter Freilassung zumindest eines mit zumindest einer Abflussöffnung verbindbaren Hohlraums zusammengefügt und gemeinsam zu einer homogenen Einheit versintert sind, wobei das zweite Distanzelement aus mehreren Teilelementen besteht, die musterartig über den von dem ersten Distanzelement umschlossenen Bereich verteilt sind.

Ein derartiger poröser Keramikfilter ist beispielsweise aus der DE 4330163 C2 bekannt. Der dort gezeigte poröse Keramikfilter umschließt einen mit zwei Abflussöffnungen verbundenen Hohlraum, wobei der Keramikfilter aus zwei ebenen Platten besteht, die einen Abstand voneinander haben, die sich im wesentlichen parallel zueinander erstrecken und die durch ein erstes Distanzelement im Bereich des Außenumfangs gegeneinander abgedichtet und miteinander verbunden sind, sowie durch ein zweites Distanzelement, das aus mehreren Teilelementen besteht, die musterartig über den von dem ersten Distanzelement umschlossenen Bereich verteilt sind. Die ebenen Platten und die Distanzelemente sind aus einer ungesinterten Grünfolie durch Stanzen hergestellt.

Der gegenseitige Abstand einander benachbarter Teilelemente beträgt dort nicht mehr als 20 mm. Hierdurch werden die Platten aufeinander abgestützt. Der Keramikfilter erfährt dadurch keine nennenswerte Formveränderung, wenn seine Außenseite durch den Druck des zu reinigenden Mediums oder seine Innenseite durch den Druck der gegebenenfalls in den Hohlraum eintretenden Rückspülflüssigkeit beaufschlagt wird. Der Keramikfilter ist von homogenem Aufbau. Er besteht sowohl im Bereich der Platten als auch im Bereich des ersten Distanzelementes als auch im Bereich des zweiten Distanzelementes aus einem Werkstoffkörper, der homogen ineinander übergehend ausgebildet ist. Er weist dadurch nicht nur eine besonders große, mechanische und thermische Widerstandsfähigkeit auf, sondern darüber hinaus eine besonders gute Maßhaltigkeit und Dauerhaftigkeit, was es erleichtert, Unwuchterscheinungen zu vermeiden.

Poröse Keramikfilter der gattungsgemäßen Art gelangen primär in den Bereichen der Mikro-und Ultrafiltration zur Anwendung und sollten daher eine besonders gute mechanische, chemische und thermische Stabilität aufweisen. Dies gilt insbesondere für Anwendungen in organischen Lösungsmitteln und heißen, aggressiven Prozessmedien der chemischen Industrie, wie in der Lebensmittelindustrie, wo die Dampfsterilisation zur Anwendung kommt und zu einer erheblichen Belastung des Filters führt.

Die erforderliche mechanische, chemische und thermische Stabilität geht einher mit Mindestanforderungen an die Schichtdicke der einzelnen Bereiche des Keramikfilters. Eine hohe Schichtdicke verschlechtert jedoch die Filterleistung, da dadurch die Permeabilität des Filters herabgesetzt wird.

Der Erfindung liegt daher die Aufgabe zugrunde, einen porösen Keramikfilter der oben genannten Art bereitzustellen, welcher bei besonders hoher mechanischer, chemischer und thermischer Stabilität eine besonders hohe Filterleistung aufweist.

Diese Aufgabe wird erfindungsgemäß dadurch gelöst, dass zumindest ein erstes Teilelement einen sich im Wesentlichen linear in Richtung der Abflussöffnung erstreckenden Abschnitt umfasst, von dem aus eine Mehrzahl zueinander parallel angeordneter Abschnitte abzweigt. Vorteilhafte Weiterbildungen ergeben sich aus den Unteransprüchen.

Die Erfindung geht dabei von der Überlegung aus, dass eine besonders hohe Filterleistung durch eine Verringerung des hydraulischen Widerstands, d. h. durch eine Vergrößerung der Permeabilität der wirksamen Filterflächen erreicht werden könnte. Als Filterflächen dienen hierbei sowohl die Hauptplattenflächen als auch die entsprechenden Flächen der ersten und zweiten Distanzelemente. Insbesondere eine Verringerung der Dicke der Hauptplattenfläche verbessert hier die Permeabilität und die Filterleistung spürbar.

Um dabei jedoch die mechanische Stabilität des Filters nicht zu verschlechtern, sollte zum Ausgleich einer dünneren Plattenschicht auf geeignete Weise eine Stabilisierung der Filterstruktur erreicht werden. Dies ist durch eine geeignete Innenstruktur des Filters erreichbar, insbesondere durch eine entsprechende Ausgestaltung der Teilelemente des zweiten Distanzelements. Diese sollten nicht nur senkrecht zur auf die Abflussöffnung gerichteten Flussrichtung angeordnete Abschnitte umfassen, sondern auch entlang dieser Abflussrichtung angeordnete Abschnitte. Die ebenfalls als Filterflächen dienenden, senkrecht zur Flussrichtung und zueinander parallel angeordneten Abschnitte sollten dann von diesem, auf die Abflussöffnung gerichteten Abschnitt abzweigen. Die dadurch entstehenden, bei mehreren Teilelementen nach diesem Muster sternförmig angeordneten Streben mit T-förmigen Strukturen an den Abzweigen bilden so eine Gitterstruktur, die eine erhebliche Verbesserung der mechanischen Stabilität bedeutet und so eine Reduzierung der Schichtdicke der Platten überhaupt erst ermöglicht.

In vorteilhafter Ausgestaltung bildet wenigstens ein Teil der parallel angeordneten Abschnitte Kreisbögen, deren Mittelpunkt im Bereich der Abflussöffnung liegt. Eine derartige Anordnung bietet mehrere Vorteile: Einerseits ergibt sich so eine gleichmäßige Stabilisierung des gesamten durch die Kreisbogen gebildeten Kreissektors. Weiterhin sind die als Filterflächen wirkenden Abschnitte stets senkrecht zur Flussrichtung in Richtung der Abflussöffnung angeordnet, was sich vorteilhaft auf die Filterleistung und den hydraulischen Widerstand auswirkt. Schließlich ist eine derartige Anordnung besonders einfach in kurzer Zeit herstellbar.

In weiterer vorteilhafter Ausgestaltung weist das jeweilige Teilelement einen sich in Richtung der Abflussöffnung erstreckenden linearen Fortsatz auf. Ein derartiger Fortsatz stabilisiert den Filter im Innenbereich, d. h. dem um die Abflussöffnung liegenden Bereich. Weiterhin wird eine Strömungsstabilisierung erreicht und eventuelle Turbulenzen durch ein Abströmen des Filtrats von den auf die Abflussöffnung gerichteten Abschnitten vermindert.

Vorteilhafterweise zweigen die parallel angeordneten Abschnitte nur auf einer Seite des sich im Wesentlichen linear in Richtung der Abflussöffnung erstreckenden Abschnitts ab und der Keramikfilter weist ein entsprechend dem ersten Teilelement ausgestaltetes zweites Teilelement auf, wobei die beiden Teilelemente derart angeordnet sind, dass die sich im Wesentlichen linear in Richtung der Abflussöffnung erstreckenden Abschnitte parallel zueinander angeordnet sind. Durch eine derartige Anordnung ergibt sich zwischen den auf die Abflussöffnung gerichteten Abschnitten ein Fließkanal, der sowohl eine Durchleitung von Filtrat, als auch von Rückspülmittel ermöglicht. Somit wird die Durchströmung des Filters insgesamt verbessert.

In weiterer vorteilhafter Ausgestaltung bilden die Enden der auf einer Seite des jeweiligen sich im Wesentlichen linear in Richtung der Abflussöffnung erstreckenden Abschnitts abzweigenden zueinander parallel angeordneten Abschnitte eine Gerade. Diese erstreckt sich vorteilhafterweise im Wesentlichen linear in Richtung der Abflussöffnung. Damit ergibt sich für das jeweilige Teilelement eine kammartige Form. Die Zinken des Kamms sind entlang der Strömungsrichtung des Filtrats auf die Abflussöffnung zu ausgerichtet. Somit strömt das zu filternde Medium an den Zinken entlang, so dass hier eine besonders gute Filtration erreicht wird.

Vorteilhafterweise ist das zweite Distanzelement bezüglich der Abflussöffnung radiärsymmetrisch. Die Radiärsymmetrie hat vielfache Vorteile: Einerseits ergibt sich so eine besonders gleichmäßige Stabilisierung des Filters in allen Bereichen und eine Minimierung von Unwuchten. Die Zusammenfassung und der Austausch der Keramikfiltereinheiten gestaltet sich dabei ebenfalls besonders einfach, ebenso die Herstellung. Hinsichtlich der Struktur ergibt sich gerade in Verbindung mit der beschriebenen kammartigen Ausgestaltung der Teilelemente der Vorteil, dass sich zwei kammartige Elemente an den Enden ihrer Zinken gegenüberstehen und einen von Zinken eingefassten, in Richtung der Abflussöffnung ausgerichteten Filterkanal bilden. Hierdurch wird eine besonders gute Filtration bei gleichzeitig minimalem hydraulischen Widerstand erreicht.

Als vorteilhaft hat es sich erwiesen, wenn der Keramikfilter einen kreisförmig begrenzten Außenumfang hat, der die Abflussöffnung konzentrisch umschließt. Dies erlaubt es, den Keramikfilter in weiterer vorteilhafter Ausgestaltung besonders einfach in eine um die Abflussöffnung rotierende Bewegung zu versetzen, was die Gefahr vermindert, dass sich während der bestimmungsgemäßen Verwendung festhaftende Anlagerungen auf den Anströmflächen bilden.

Nach einer vorteilhaften Ausgestaltung sind die zweiten Distanzelemente durch einen Gieß- oder Prägeprozess erzeugt und verfestigt. Hierdurch wird eine besonders gute gegenseitige Verbindung zwischen den Distanzelementen und den Platten erzielt.

Vorzugsweise sind bei dem Keramikfilter die Platten durch zumindest ein erstes Distanzelement im Bereich ihres Außenumfangs gegeneinander abgedichtet sowie miteinander verbunden. Die Platten und das Distanzelement können unter Verwendung der bekannten Ausgangsstoffe wie beispielsweise Aluminiumoxid erzeugt sein, wobei während des gesamten Herstellungsprozesses eine ganzflächige Unterstützung möglich ist. Gerade in Verbindung mit der beschriebenen Ausgestaltung der Innenstruktur durch das zweite Distanzelement kann die Wandstärke der Platten dadurch bis auf Werte von ca. 0,25 bis 0,75 mm reduziert sein, was die Erzielung von sehr geringen hydraulischen Widerständen ermöglicht.

Trotz der geringen Wandstärke ist es möglich, den Platten in sich selbst einen unsymmetrisch geschichteten Aufbau zu geben und beispielsweise kleinere Porenradien auf der Anströmseite als auf der davon abgewandten Rückseite vorzusehen. Die Größe der Porenradien liegt im Allgemeinen im nm- bis µm-Bereich. Der sich während der bestimmungsgemäßen Verwendung ergebende hydraulische Widerstand lässt sich dadurch noch weiter vermindern, ohne eine Verschlechterung des Abscheidungsgrades in Kauf nehmen zu müssen.

Die Platten sind vorteilhafterweise in dem von dem ersten Distanzelement umschlossenen Bereich durch zumindest ein zweites Distanzelement verbunden. Die für die Filtration zur Verfügung stehende, aktive Filterfläche, d. h. die Plattengröße, lässt sich hierdurch steigern, ohne dass die Bruchgefährdung steigt. Eine Optimierung der Filterleistung lässt sich dabei durch die beschriebene Anordnung der Teilelemente des zweiten Distanzelements erreichen. Die Optimierung ist darauf gerichtet, während der bestimmungsgemäßen Verwendung einen möglichst großen Anteil der Platten bis zur Grenze der statischen Tragfähigkeit ausgeglichen zu belasten. Die Wandstärke der Platten kann dementsprechend reduziert und der hydraulische Widerstand gesenkt werden.

Die mit der Erfindung erzielten Vorteile bestehen insbesondere darin, dass durch die symmetrische, Paare von einander zugewandten und abgewandten Kämmen bildende Struktur des Keramikfilters eine einfache Herstellbarkeit und ausgezeichnete hydraulische Permeabilität erreicht wird sowie die Möglichkeit gegeben ist, die aktive Filterfläche weiter zu steigern, ohne eine Verschlechterung der mechanischen Widerstandsfähigkeit in Kauf nehmen zu müssen. Sämtliche Bauteile sind problemlos rückspülbar und hierdurch leicht zu reinigen. Sie lassen sich in der Flüssigkeits- und Gasfiltration verwenden, des Weiteren in dem Cross-Flow und dem Dead-End-Betrieb und in jeglicher Art der Separation, die durch eine Modifikation des Filtermaterials erreicht wird. Beispiele sind die Mikro-, Ultra-, Nano-und Hyperfiltration, Pervaporation, Pertraktion und Dialyse.

Radiärsymmetrisch aufgebaute Ausführungen können als Rotationsfilter zur Anwendung gelangen, indem der Keramikfilter relativ zur Rohlösung mit hoher Geschwindigkeit rotiert, wobei sich eine hohe Überströmgeschwindigkeit mit großer Scherkraft ergibt und eine Verblockung der Anströmflächen durch Fouling verhindert wird. Ausführungen, die vollständig aus keramischen Werkstoffen bestehen, sind in beliebiger Größe realisierbar und hochgradig temperaturbeständig. Darüber hinaus haben kaskadenartig aufgebaute Keramikfilter, durch ihr geringes Totvolumen bedingt, einen äußerst kleinen Platzbedarf bei großer Leistung. Die Platten haben im Regelfall nur eine Dicke von unter 0,5 mm und einen gegenseitigen Abstand von etwa 0,2 bis 1 mm innerhalb des Keramikfilters.

Werden mehrere Keramikfiltereinheiten modulartig zu einer in sich geschlossenen Baueinheit zusammengefasst, beispielsweise durch Auffädeln auf ein Rohr, dann kann deren gegenseitiger Abstand ähnlich gering bemessen sein und in Abhängigkeit von der Viskosität der Rohlösung 0,4 bis 2 mm betragen. Das Rohr besteht dabei zweckmäßig ebenfalls aus einem keramischen Werkstoff. Es umschließt einen Hohlraum, der mit den Innenräumen der einzelnen Keramikfiltereinheiten strömungsleitend verbunden ist. Die erzielbaren Filterleistungen eines solchen Moduls sind dementsprechend unter Umständen erheblich.

Die Erfindung wird anhand von Ausführungsbeispielen in den Zeichnungsfiguren näher erläutert. Diese zeigen:
- Fig. 1: einen Keramikfilter in längsgeschnittener Darstellung in einem ersten Ausführungsbeispiel,
- Fig. 2: eine modifizierte Ausführungsform eines Keramikfilters ebenfalls in längsgeschnittener Ausführung, bei welchem die Kanäle bzw. Stege in nur eine Richtung zeigen,
- Fig. 3: eine Ausführungsform ähnlich der in Fig. 2 gezeigten, aber mit zwölf Teilelementen.

Die in den Zeichnungsfiguren gezeigten porösen Keramikfilter 1 umfassen zwei ebene Platten 2, die aufgrund der Schnittdarstellung deckungsgleich und daher nicht getrennt dargestellt sind. Die Platten 2 sind kreisförmig. Sie haben einen Abstand voneinander und erstrecken sich parallel zueinander. Die Platten 2 sind durch ein erstes, nicht näher dargestelltes Distanzelement 4 im Bereich des Außenumfangs gegeneinander abgedichtet und miteinander verbunden. Sie bilden somit einen mit zwei ebenfalls nicht näher dargestellten, jeweils im Zentrum der kreisförmigen Platten 2 eingebrachten Abflussöffnungen 6 versehenen Hohlraum 8. Im Hohlraum 8 ist, die Platten 2 verbindend, ein zweites Distanzelement 10 angeordnet, das aus mehreren Teilelementen 10.1 - 10.8 besteht, die musterartig über den von dem ersten Distanzelement 4 umschlossenen Bereich verteilt sind.

Der Keramikfilter 1 ist vorzugsweise von homogenem Aufbau. Er besteht sowohl im Bereich der Platten 2 als auch im Bereich des ersten Distanzelementes 4 als auch im Bereich des zweiten Distanzelementes 10 aus einem Werkstoffkörper, der homogen ineinander übergehend ausgebildet ist. Er weist dadurch nicht nur eine besonders große, mechanische und thermische Widerstandsfähigkeit auf, sondern darüber hinaus eine besonders gute Maßhaltigkeit und Dauerhaftigkeit, was es erleichtert, Unwuchterscheinungen zu vermeiden. Die Verwendung in einem Rotationsfilter wird dadurch erleichtert.

Die Struktur der Teilelemente 10.1 - 10.8 ist nun derart ausgestaltet, dass eine besonders hohe Stabilität des Keramikfilters 1 bei gleichzeitig besonders hoher Filterleistung erreicht wird.

Dazu umfassen die Teilelemente 10.1 - 10.8 jeweils einen sich in Richtung der Abflussöffnung 6 erstreckenden Abschnitt 12, von dem aus zu jeweils einer Seite parallel zueinander angeordnete Abschnitte 14 abzweigen. Die letzteren Abschnitte 14 bilden Kreisbögen, deren Mittelpunkte in der Abflussöffnung 6 liegen. Sie sind voneinander gleich beabstandet.

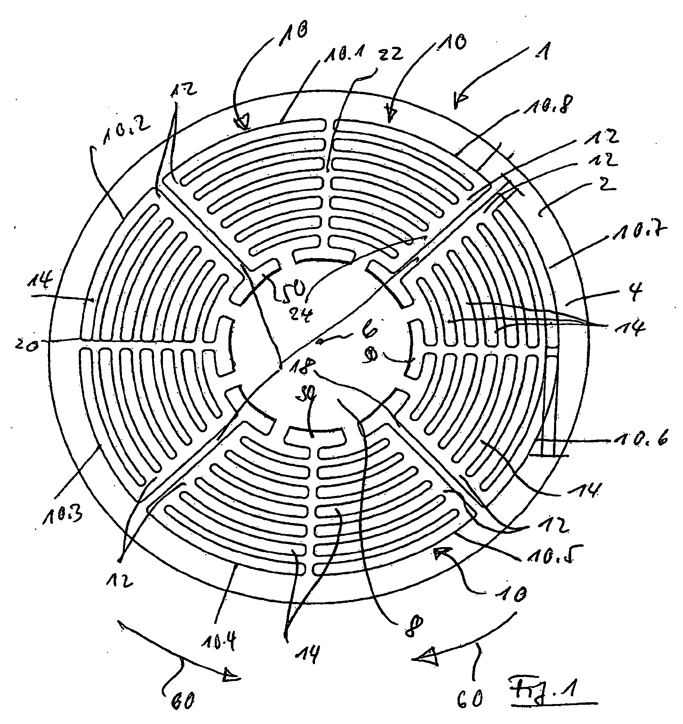

Die Teilelemente 10.1 - 10.8 sind bei Fig. 1 jeweils paarweise derart angeordnet, dass die zur Abflussöffnung 6 gerichteten Abschnitte 12 jeweils parallel zueinander angeordnet sind und einen Fließkanal 18 bilden. Die davon abzweigenden Abschnitte 14 zweigen jeweils auf der dem Fließkanal 18 abgewandten Seite ab. Ihre Spitzen bilden pro Teilelement 10.1 - 10.8 jeweils eine Gerade 20, die ebenfalls auf die Abflussöffnung 6 gerichtet ist.

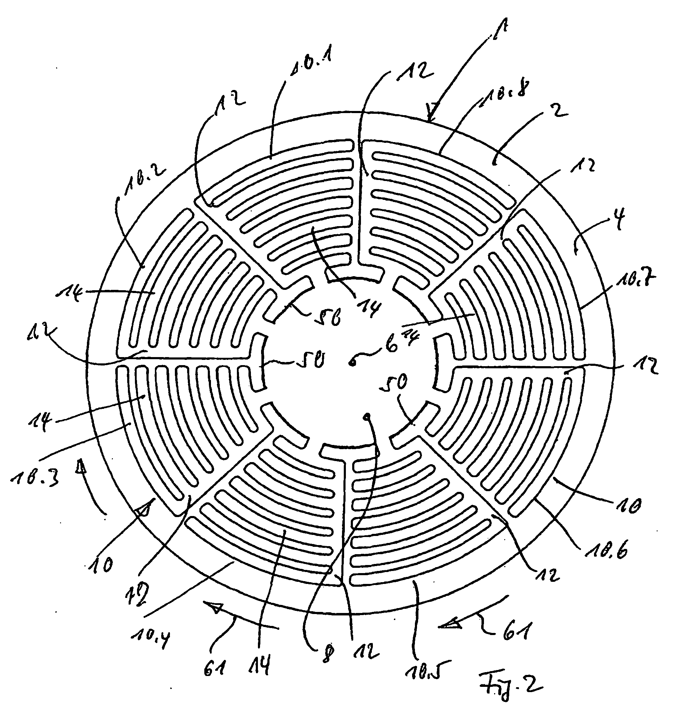

Der Keramikfilter 1 gem. Fig. 1 und 2 ist radiärsymmetrisch ausgestaltet, im Ausführungsbeispiel nach den Figuren achtzählig. Dadurch bilden sich zwischen den Spitzen der abzweigenden Abschnitte 14 bei Fig. 1 ebenfalls Fließkanäle 22. Durch die symmetrische Ausgestaltung wird die Unwucht des für eine Rotation ausgelegten Keramikfilters 1 minimiert. Die Gegenläufigkeit der Abschnitte 14 gem. Fig. 1 wird durch die Pfeile 60 dargestellt.

Durch die über die gesamte Platte verteilten Teilelemente 10.1 - 10.8 und ihre durch die vielfachen Abzweigungen entstehenden Abschnitte werden die Platten 2 in ausgezeichneter Weise aufeinander abgestützt. Der Keramikfilter 1 erfährt dadurch keine nennenswerte Formveränderung, wenn seine Außenseite durch den Druck des zu reinigenden Mediums beaufschlagt wird oder seine Innenseite durch den Druck der gegebenenfalls in den Hohlraum 8 eintretenden Rückspülflüssigkeit.

Bei dem in Fig. 2 dargestellten Ausführungsbeispiel sind acht Teilelemente 10.1 - 10.8 vorgesehen, die acht zur Abflussöffnung 6 verlaufende Abschnitte 12 aufweisen. Von diesen Abschnitten 12 zweigen Abschnitte 14 ab, die alle in die gleiche Richtung zeigen, nämlich bei dem in Fig. 2 dargestellten Ausführungsbeispiel in eine im Uhrzeigersinn rechts umlaufende Drehrichtung (Pfeile 61). Die Spitzen der Abschnitte 14 in Fig. 2 bilden ebenfalls eine Gerade und weisen quasi zur Rückseite der radial angeordneten Abschnitte 12 des Nachbarteilelementes hin.

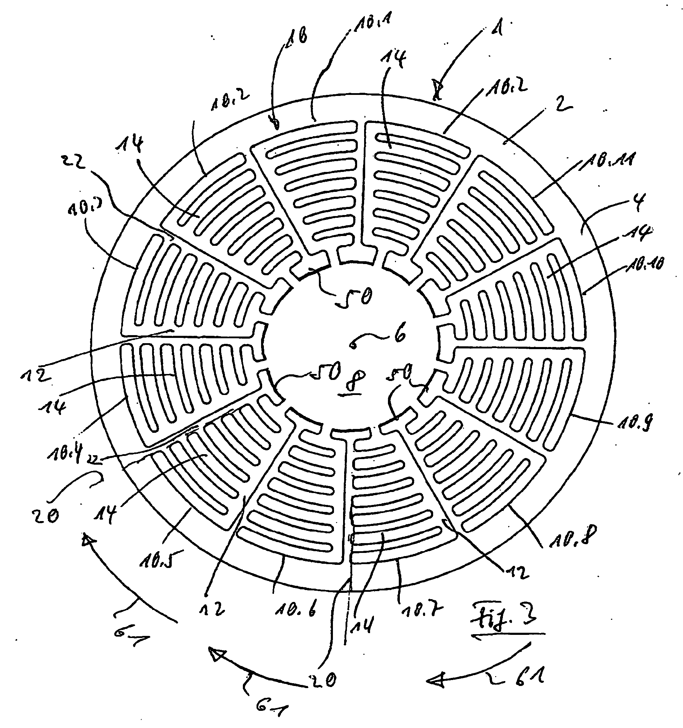

Bei dem in Fig. 3 dargestellten Ausführungsbeispiel ist die Abstehrichtung der Abschnitte 14 von den radial verlaufenden Abschnitten 12 ebenfalls gleichgerichtet (im Uhrzeigersinn rechtsumlaufend, Pfeile 61), jedoch sind insgesamt zwölf Teilelemente 10.1 - 10.12 vorgesehen.

Darüber hinaus ist es möglich, die innersten Abschnitte 50 mit unterschiedlichen Längen auszubilden, um das Fließverhalten innerhalb der Filterscheibe gezielt zu beeinflussen. Die Kanäle zur Abführung des Filtrates können sich dann an unterschiedlichen Positionen befinden, d. h. nicht notwendigerweise mittig bezogen auf das Teilelement, wie dargestellt, sondern in Drehrichtung nach links oder rechts versetzt, wobei der Versatz von Teilelement zu Teilelement unterschiedlich sein kann.

Die Herstellung der Keramikfilter 1 erfolgt derart, dass das zweite Distanzelement 10 in einem Gieß- oder Prägeprozess gefertigt wird. Die Teile werden dann in der gewünschten Weise relativ zueinander angeordnet und gegebenenfalls mittels eines geringfügigen Anpressdrucks in dieser Anordnung gehalten. Die Platten 2 und die ersten und zweiten Distanzelemente 4, 10 werden nach dem Zusammenfügen gemeinsam zu einer homogenen Einheit versintert, wobei das erste und zweite Distanzelement 4, 10 und die Platten 2 einstückig ineinander übergehend verbunden sind. Alle hierbei zu verbindenden Elemente sind aus miteinander kompatiblen oder identischen Grünfolien gewonnen, was sich leicht verwirklichen lässt.

Die so erhaltenen porösen Keramikfilter 1 zeichnen sich nicht nur durch eine besonders große Festigkeit aus, sondern haben auch eine besonders große Maßhaltigkeit. Ferner erhält man eine wesentlich vergrößerte, wirksame Filterfläche und der hydraulische Widerstand lässt sich herabsetzen. Die so erhaltenen porösen Keramikfilter 1 lassen sich auf vereinfachte Weise herstellen, sie haben eine durchgängige Porosität.

### BEZUGSZEICHENLISTE

- 1: Keramikfilter
- 2: Platte
- 4: Distanzelement
- 6: Abflussöffnung
- 8: Hohlraum
- 10: Distanzelement
- 10.1 - 10.12: Teilelement
- 12: Abschnitt
- 14: Abschnitt
- 16: Fortsatz
- 18: Fließkanal
- 20: Gerade
- 22: Fließkanal
- 50: Abschnitt
- 60: Pfeilrichtung
- 61: Pfeilrichtung

## Patentansprüche

1. Poröser Keramikfilter (1), erhältlich aus einer formbaren keramischen Masse, welche durch Sintern in ihrer Form fixiert wird, umfassend zwei ebene Platten (2), welche durch erste und zweite Distanzelemente (4, 10) voneinander beastandet sind, und welche unter Freilassung zumindest eines mit zumindest einer Abflussöffnung (6) verbindbaren Hohlraums (8) zusammengefügt und gemeinsam zu einer homogenen Einheit versintert sind, wobei das zweite Distanzelement (10) aus mehreren Teilelementen (10.1-10.8) besteht, die musterartig über den von dem ersten Distanzelement (4) umschlossenen Bereich verteilt sind,
**dadurch gekennzeichnet, dass** zumindest ein erstes Teilelement (10.1) einen sich im Wesentlichen linear in Richtung der Abflussöffnung (6) erstreckenden Abschnitt (12) umfasst, von dem aus eine Mehrzahl zueinander parallel angeordneter Abschnitte (14) abzweigt.

2. Keramikfilter (1) nach Anspruch 1, wobei
wenigstens ein Teil der parallel angeordneten Abschnitte (14) Kreisbögen bilden.

3. Keramikfilter (1) nach Anspruch 2, wobei
der Mittelpunkt der Kreisbögen im Bereich der Abflussöffnung (6) liegt.

4. Keramikfilter (1) nach Anspruch 1 oder 2, wobei
die Teilelemente (10.1 - 10.12) radial innenliegende Abschnitte (14) aufweisen, die mit darin an unterschiedlichen Stellen angeordneten Abflussdurchbrüchen versehen sind.

5. Keramikfilter (1) nach einem der vorhergehenden Ansprüche, wobei
die parallel angeordneten Abschnitte (14) nur auf einer Seite des sich im Wesentlichen linear in Richtung der Abflussöffnung (6) erstreckenden Abschnitts (12) abzweigen und dass der Keramikfilter (1) ein entsprechend dem ersten Teilelement (10.1) ausgestaltetes zweites Teilelement (10.2) aufweist, wobei die beiden Teilelemente (10.1, 10.2) derart angeordnet sind, dass die sich im Wesentlichen linear in Richtung der Abflussöffnung (6) erstreckenden Abschnitte (12) parallel zueinander angeordnet sind.

6. Keramikfilter (1) nach einem der vorhergehenden Ansprüche, bei dem die Enden der auf einer Seite des jeweiligen sich im Wesentlichen linear in Richtung der Abflussöffnung (6) erstreckenden Abschnitts (12) abzweigenden zueinander parallel angeordneten Abschnitte (14) eine Gerade (20) bilden.

7. Keramikfilter (1) nach einem der vorhergehenden Ansprüche, wobei das zweite Distanzelement (10) bezüglich der Abflussöffnung (6) radiärsymmetrisch ist.

8. Keramikfilter (1) nach einem der vorangehenden Ansprüche, wobei
der Keramikfilter (1) einen kreisförmig begrenzten Außenumfang hat, der die Abflussöffnung (6) konzentrisch umschließt.

9. Keramikfilter (1) nach einem der vorangehenden Ansprüche, wobei
der Keramikfilter (1) in eine um die Abflussöffnung (6) rotierende Bewegung versetzbar ist.

10. Keramikfilter (1) nach einem der vorhergehenden Ansprüche,
das zweite Distanzelement (10) durch einen Gieß- oder Prägeprozeß erzeugt ist.

11. Keramikfilter (1) nach einem der vorhergehenden Ansprüche,
**dadurch gekennzeichnet, dass**
die Platten (2) durch zumindest ein erstes Distanzelement (4) im Bereich des Außenumfangs gegeneinander abgedichtet sind.

12. Keramikfilter (1) nach einem der vorhergehenden Ansprüche, wobei
die Platten (2) in dem von dem ersten Distanzelement (4) umschlossenen Bereich durch zumindest ein zweites Distanzelement (10) verbunden sind.

13. Keramikfilter (1) nach einem der vorhergehenden Ansprüche 1 - 4 und 6 - 12, wobei
die zueinander parallel angeordneten Abschnitte (14) Teilelemente (10.1 - 10.8) gleilchgerichtet angeordnet sind (Pfeilrichtung 61).

14. Keramikfilter (1) nach einem der vorhergehenden Ansprüche 1 - 12, wobei die zueinander parallel angeordneten Abschnitte (14) Teilelemente (10.1 - 10.8) gegenläufig ausgerichtet sind (Pfeilrichtungen 60).

## Claims

1. Porous ceramic filter (1) which can be obtained from a shapeable ceramic material which is given a fixed shape by sintering, comprising two flat plates (2) which are spaced apart from one another by means of first and second spacer elements (4, 10) and which are joined and sintered together to give a homogeneous unit, leaving at least one cavity (8) that can be connected to at least one discharge opening (6), wherein the second spacer element (10) consists of multiple part elements (10.1 - 10.8) which are distributed in the manner of a pattern over the region enclosed by the first spacer element (4),
**characterized in that**
at least one first part element (10.1) comprises a first section (12) which extends essentially linearly in the direction of the discharge opening (6) and whence a plurality of mutually parallel sections (14) branch off.

2. Ceramic filter (1) according to Claim 1, wherein
at least part of the parallel sections (14) form arcs of a circle.

3. Ceramic filter (1) according to Claim 2, wherein the midpoint of the arcs lies in the region of the discharge opening (6).

4. Ceramic filter (1) according to Claim 1 or 2,
wherein
the part elements (10.1 - 10.12) have radially inner sections (14) which are provided with discharge apertures arranged at various points therein.

5. Ceramic filter (1) according to one of the preceding claims, wherein
the parallel sections (14) branch off only on one side of the section (12) extending essentially linearly in the direction of the discharge opening (6), and the ceramic filter (1) has a second part element (10.2) configured in accordance with the first part element (10.1), wherein the two part elements (10.1, 10.2) are arranged such that the sections (12) extending essentially linearly in the direction of the discharge opening (6) are arranged parallel to one another.

6. Ceramic filter (1) according to one of the preceding claims, in which the ends of the mutually parallel sections (14) branching off on one side of the respective section (12) extending essentially linearly in the direction of the discharge opening (6) form a straight line (20).

7. Ceramic filter (1) according to one of the preceding claims, wherein
the second spacer element (10) is radially symmetric with respect to the discharge opening (6).

8. Ceramic filter (1) according to one of the preceding claims, wherein
the outer perimeter of the ceramic filter (1) has a circular boundary and encloses the discharge opening (6) concentrically.

9. Ceramic filter (1) according to one of the preceding claims, wherein
the ceramic filter (1) can be set in rotational motion about the discharge opening (6).

10. Ceramic filter (1) according to one of the preceding claims, wherein
the second spacer element (10) is produced by means of a casting or stamping process.

11. Ceramic filter (1) according to one of the preceding claims, **characterized in that**
the plates (2) are sealed with respect one another by at least one first spacer element (4) in the region of the outer periphery.

12. Ceramic filter (1) according to one of the preceding claims, wherein
the plates (2) in the region enclosed by the first spacer element (4) are connected by at least one second spacer element (10).

13. Ceramic filter (1) according to one of the preceding Claims 1-4 and 6-12, wherein
the mutually parallel sections (14) are oriented in the same direction as part elements (10.1 - 10.8) (arrow direction 61).

14. Ceramic filter (1) according to one of the preceding Claims 1-12, wherein
the mutually parallel sections (14) are oriented in the opposite direction to part elements (10.1-10.8) (arrow directions 60).

## Revendications

1. Filtre céramique poreux (1), pouvant être obtenu à partir d'une masse céramique moulable qui est fixée dans sa forme par frittage, comprenant deux plaques planes (2) qui sont espacées l'une de l'autre par des premier et deuxième éléments d'espacement (4, 10) et qui sont assemblées en laissant libre au moins une cavité (8) pouvant être connectée à au moins une ouverture d'écoulement (6) et qui sont frittées ensemble pour former une unité homogène, le deuxième élément d'espacement (10) se composant de plusieurs éléments partiels (10.1-10.8) qui sont répartis sous forme de motifs sur la région entourée par le premier élément d'espacement (4), **caractérisé en ce**
**qu'**au moins un premier élément partiel (10.1) comprend une portion (12) s'étendant essentiellement linéairement dans la direction de l'ouverture d'écoulement (6), depuis laquelle part une pluralité de portions (14) disposées parallèlement les unes aux autres.

2. Filtre céramique (1) selon la revendication 1, dans lequel au moins une partie des portions (14) disposées parallèlement forment des arcs de cercle.

3. Filtre céramique (1) selon la revendication 2, dans lequel le centre des arcs de cercle est situé dans la région de l'ouverture d'écoulement (6).

4. Filtre céramique (1) selon la revendication 1 ou 2, dans lequel les éléments partiels (10.1-10.12) présentent des portions (14) situées radialement à l'intérieur qui sont pourvues d'orifices d'écoulement disposés dans celles-ci à différents endroits.

5. Filtre céramique (1) selon l'une quelconque des revendications précédentes, dans lequel les portions (14) disposées parallèlement partent seulement d'un côté de la portion (12) s'étendant essentiellement linéairement dans la direction de l'ouverture d'écoulement (6) et le filtre céramique (1) présente un deuxième élément partiel (10.2) configuré de manière correspondant au premier élément partiel (10.1), les deux éléments partiels (10.1, 10.2) étant disposés de telle sorte que les portions (12) s'étendant essentiellement linéairement dans la direction de l'ouverture d'écoulement (6) soient disposées parallèlement l'une à l'autre.

6. Filtre céramique (1) selon l'une quelconque des revendications précédentes, dans lequel les extrémités des portions (14) disposées parallèlement les unes aux autres partant d'un côté de la portion (12) respective s'étendant essentiellement linéairement dans la direction de l'ouverture d'écoulement (6) forment une droite (20).

7. Filtre céramique (1) selon l'une quelconque des revendications précédentes, dans lequel le deuxième élément d'espacement (10) présente une symétrie radiaire par rapport à l'ouverture d'écoulement (6).

8. Filtre céramique (1) selon l'une quelconque des revendications précédentes, dans lequel le filtre céramique (1) présente une périphérie extérieure limitée sous forme circulaire qui entoure concentriquement l'ouverture d'écoulement (6).

9. Filtre céramique (1) selon l'une quelconque des revendications précédentes, dans lequel le filtre céramique (1) peut être déplacé suivant un mouvement de rotation autour de l'ouverture d'écoulement (6).

10. Filtre céramique (1) selon l'une quelconque des revendications précédentes, dans lequel le deuxième élément d'espacement (10) est produit par un processus de moulage ou de gaufrage.

11. Filtre céramique (1) selon l'une quelconque des revendications précédentes, **caractérisé en ce que** les plaques (2) sont étanchéifiées l'une par rapport à l'autre par au moins un premier élément d'espacement (4) dans la région de la périphérie extérieure.

12. Filtre céramique (1) selon l'une quelconque des revendications précédentes, dans lequel les plaques (2) sont connectées par au moins un deuxième élément d'espacement (10) dans la région entourée par le premier élément d'espacement (4).

13. Filtre céramique (1) selon l'une quelconque des revendications précédentes 1 à 4 et 6 à 12, dans lequel les portions (14) disposées parallèlement les unes aux autres d'éléments partiels (10.1-10.8) sont disposées dans le même sens (sens de la flèche 61).

14. Filtre céramique selon l'une quelconque des revendications précédentes 1 à 12, dans lequel les portions (14) disposées parallèlement les unes aux autres d'éléments partiels (10.1-10.8) sont orientées en sens inverse (sens des flèches 60).
